# EUROPÄISCHE PATENTSCHRIFT

(11) **EP 3 519 192 B1**
(45) Veröffentlichungstag und Bekanntmachung des Hinweises auf die Patenterteilung: **22.12.2021**
(21) Anmeldenummer: 17787883.2
(22) Anmeldetag: 28.09.2017
(51) Int. Cl.: B32B 27/32, B32B 27/18, B32B 27/08, C08K 5/00

(54) **MEHRSCHICHTIGE POLYOLEFINFOLIE**
MULTILAYER POLYOLEFIN FILM
FEUILLE DE POLYOLÉFINE MULTICOUCHE

(30) Priorität: 28.09.2016 DE 102016118357
(43) Veröffentlichungstag der Anmeldung: 07.08.2019
(73) Patentinhaber: CONSTAB Polyolefin Additives GmbH, 59602 Rüthen (DE)
(72) Erfinder: STRUNK-WESTERMANN, Andreas, 58300 Wetter (DE); BRANDHOFF, Patrick, 33142 Büren (DE)
(74) Vertreter: Schneiders & Behrendt Bochum
(86) Internationale Anmeldenummer: PCT/EP2017/074653
(87) Internationale Veröffentlichungsnummer: WO 2018/060345

(56) Entgegenhaltungen:
- US-A1- 2004 197 584
- US-A1- 2008 286 547
- US-A1- 2011 143 155
- Anonymous: "Reliance Value Innovation TECHNICAL DATA SHEET Product Name Nucleating Agent SW-ZC-3988 Equivalent Brand Millad 3988", , 31 December 2008 (2008-12-31), pages 1-2, XP055782522, Retrieved from the Internet: URL:http://www.sunwisechem.com/Uploadfiles /files/TDS%20Nucleating%20agent%20SW-ZC-39 88.pdf [retrieved on 2021-03-05]

## Beschreibung

Die Erfindung betrifft eine mehrschichtige Polyolefinfolie, welche wenigstens eine Kern- und zwei Deckschichten aufweist. Die Polyolefinfolie weist eine verbesserte Barrierewirkung gegen Sauerstoff und Wasserdampf auf.

Mehrschichtige Polyolefinfolien sind bekannt und werden vielfach für Verpackungszwecke eingesetzt, beispielsweise zum Verpacken von Feuchtigkeit enthaltenden Lebensmitteln, wie beispielsweise Fleisch, Käse, Salat, Frischobst und Frischgemüse. Soweit das Lebensmittel nicht unmittelbar in der Folie verpackt wird, wird vielfach eine Schale verwandt, in der das Verpackungsgut enthalten ist und die mit einer solchen Folie verschlossen wird.

Polyolefine sind hydrophobe Materialien, sodass daraus hergestellte Folien gegenüber Wasserdampf und Luft weithin undurchlässig sind. Die verwandten Schichtdicken von 20 bis 100 µm sind jedoch nicht geeignet, Feuchtigkeit und Sauerstoff vollständig auszuschließen. Über die Zeit - einige Tage bis wenige Wochen - kann das Verpackungsgut durch eindringenden Sauerstoff und Wasserdampf aus der Luft geschädigt werden. Verpackte Lebensmittel können außerdem Wasser verlieren.

Mehrschichtige Polyolefinfolien bestehen in der Regel aus einer Kernschicht und weisen zumeist beidseitig eine Deckschicht auf, die dazu dient, die Gebrauchseigenschaften der Folie weiter zu optimieren. Gegebenenfalls befinden sich zwischen der Kernschicht und der Deckschichten noch Zwischenschichten, sodass neben dreischichtigen Folien beispielsweise auch vier- und fünfschichtige Folien am Markt zu finden sind. Die Zwischenschichten kann man, je nach Verwandtschaftsgrad, als weitere Kernschichten oder Deckschichten auffassen. Die Deckschichten enthalten dabei Zuschläge, die vor allem der Verbesserung der Oberflächeneigenschaften der Folien dienen. Solche Zuschläge sind beispielsweise Antihaftmittel und Antibeschlagmittel. US2008286547 und WO0238383 offenbaren Polyolefin-Mehrschichtfilme.

Wie schon dargestellt, ist es insbesondere bei verpackten Lebensmitteln ein Problem, die in der Packung enthaltene Feuchtigkeit konstant zu halten - also ein Austrocknen des Verpackungsgutes zu verhindern - als auch das Eindringen von Sauerstoff zu verhindern - also das verpackte Lebensmittel vor Oxidation zu schützen. Vielfach ist es auch erforderlich, das Verpackungsgut vor eindringender Feuchtigkeit zu schützen. Die Barrierewirkung herkömmlicher Folien reicht dazu in der Regel über kurze Zeitdauer aus, stellt aber über längere Zeit einen die Haltbarkeit begrenzenden Faktor dar.

Dementsprechend ist es Aufgabe der Erfindung, eine Folie bereit zu stellen, die eine verbesserte Barrierewirkung gegenüber Sauerstoff und Wasserdampf aufweist, dabei aber in ihren übrigen für den Gebrauch wichtigen Eigenschaften nicht beeinträchtigt ist.

Diese Aufgabe wird mit eine Polyolefinfolie der eingangs genannten Art gelöst, bei der wenigstens eine Schicht ein Kohlenwasserstoffharz und ein Nukleierungsmittel enthält, insbesondere in der gleichen Schicht. Mehrschichtige Polyolefinfolie mit Barrierewirkung gegen Sauerstoff und Wasserdampf, welche zwei Deckschichten, zwei Zwischenschichten und eine Kernschicht aufweist, wobei die beiden Zwischenschichten und die Kernschicht ein Kohlenwasserstoffharz zusammen mit einem Nukleirungsmttel enthalten dadurch gekennzeichnet, dass das Kohlenwasserstoffharz ein Dicyclopentadien (DCPD) C₅ - oder C₉ -Harz mit einer Erweichungstemperatur im Bereich von 120 bis 160°C ist und das Nukleirungsmittel Bis(4-propylbenzyliden)propylsorbit, Bis(3,4-dimethylbenzyliden)sorbit oder N-(3,5-bis-(2.2-dimethylpropionylamino)phenyl)-2,2-dimethyl-propionamid ist.

Erfindungsgemäße mehrschichtige Polyolefinfolien weisen eine Kernschicht auf, die in beidseitig angeordneten Deckschichten eingebettet ist. Zusätzlich können zwischen Deckschicht und Kernschicht noch weitere Schichten angeordnet sein, die, je nach Zusammensetzung und Eigenschaft, als weitere Kernschicht oder zusätzliche Deckschicht gewertet werden können.

Wenigstens eine Schicht der erfindungsgemäßen Polyolefinfolie enthält ein Kohlenwasserstoffharz vorzugsweise zusammen mit einem Nukleierungsmittel. Beide Komponenten liegen zusammen in einer Schicht vor. Bei Anordnung der beiden Komponenten in verschiedenen Schichten wird der erfindungsgemäße Zweck dann erreicht, wenn die beiden Komponenten durch Migration zusammenkommen, etwa aus benachbarten Schichten.

Kohlenwasserstoffharze sind synthetische Harze, die durch Reaktion von Kohlenwasserstoffen mit sich selbst in Gegenwart von Katalysatoren entstehen. Sie haben in der Regel ein mittleres Molekulargewicht von weniger als 2000 und Erweichungspunkte im Bereich von etwa 100 bis mehr als 200°C. Sie kommen in der Lack-, Druckfarben- und Polymerchemie als Modifizierer zum Einsatz.

Häufig verwandte Typen von Kohlenwasserstoffharzen sind die DCPD-, C₅- und Cg-Harze, die als Modifizierer in der Kunststoffchemie eingesetzt werden. Diese Harze haben in der Regel einen Erweichungspunkt im Bereich von 100 bis 180°C.

Die Bezeichnungen C₅-Harz und Cg-Harz beziehen sich auf die jeweils verwendeten Basismonomere der Harze, welche aus der C₅- respektive C₉-Fraktion gewonnen werden, welche beim thermischen Cracken höherer Kohlenwasserstoffe, beispielsweise aus Naphtha, entstehen. Die Bezeichnung C₅-Harze schließt ebenfalls diejenigen Harze ein, bei deren Herstellung nur einige wenige oder auch nur einzelne Monomere dieser Fraktion Verwendung finden, insbesondere Harze, welche überwiegend aus Dicyclopentadien (DCPD), dem Dimer des Cyclopentadien, hergestellt werden. Letztere werden auch häufig als DCPD-Harze bezeichnet. Die Bezeichnung C₉-Harze schließt ebenfalls diejenigen Harze ein, bei deren Herstellung nur einige wenige oder auch nur einzelne Monomere dieser Fraktion Verwendung finden, insbesondere Harze, welche zu überwiegendem Anteil aus α-Methylstyrol hergestellt werden.

Vielfach werden Kohlenwasserstoffharze im Anschluss an die Polymerisation hydriert, um vorhandene Doppelbindungen abzusättigen und dadurch gezielt die Mischbarkeit mit Kunststoffen einzustellen. Die Hydrierung kann vollständig oder auch nur teilweise durchgeführt werden. Bei den Harzen, welche in der erfindungsgemäßen Folie Verwendung finden, kann es sich um vollständig hydriertewie auch nur teilhydrierte Harze handeln.

Nukleierungsmittel werden in der Kunststofftechnik zur Beschleunigung der Kristallisation und zur Erhöhung der Transparenz eingesetzt. Es handelt sich dabei zumeist um Stoffe, die als Kristallisationskeime dienen. Ein hoher Kristallisationsgrad des Polymers ist für die Eigenschaften des Kunststoffs günstig. Zudem verbessern eine Reihe von Nukleierungsmitteln die Transparenz des Kunststoffs.

Weit verbreitete Nukleierungsmittel sind beispielsweise Benzoesäuresalze, Metallsalze von Dicarbonsäuren, etwa Hexahydrophthalsäure, Sorbitacetale, Phosphatestersalze, Glycolatsalze, Di-, Tri- und Tetraamide, Naphthalindicarbonsäuresalze und -amide, Polyvinylcyclohexan, aber auch natürliche Stoffe wie Talkum. Für die Modifizierung von Polyolefinfolien wurden Kombinationen von Phosphatestersalzen und Sorbitacetalen vorgeschlagen. Eine Vielzahl von Nukleierungsmitteln wurde von der Firma Milliken Chemical entwickelt.

Es wurde nun überraschend gefunden, dass die Modifizierung von Polyolefinen mit einer Kombination aus Kohlenwasserstoffharzen und Nukleierungsmitteln die Barrierewirkung dieser Kunststoffe gegenüber Wasserdampf und Sauerstoff signifikant verbessert. Dazu werden die beiden Modifizierer vorzugsweise in die Kernschicht oder in eine oder mehrere der Kernschichten eingebracht. Bei Vorliegen mehrerer Kernschichten werden vorzugsweise alle Kernschichten mit dem Kohlenwasserstoffharz und dem Nukleierungsmittel modifiziert.

In der Regel enthalten die Deckschichten kein Kohlenwasserstoffharz oder Nukleierungsmittel, jedoch können diese auch hier eingebracht werden, um die Barrierewirkung zu erhöhen.

Das Kohlenwasserstoffharz liegt im Polymer in einer Menge von 5 bis 20 Gew.-% vor, vorzugsweise 6 bis 12 Gew.-%. Dies geht einher mit einer Menge von 0,1 bis 1 Gew.-% Nukleierungsmittel, insbesondere 0,2 bis 0,8 Gew.-%.

Die erfindungsgemäßen Polyolefinfolien bestehen vorzugsweise aus Polyethylen, Polypropylen oder deren Copolymeren. Bevorzugt sind Polypropylenfolien, bei denen die Kernschicht insbesondere aus einem Homopolymer besteht und die Deckschichten aus einem Random-Copolymer mit Ethylen oder einem Terpolymer mit Ethylen, Propylen, Butylen und/oder weiteren α-Olefinen.

Bevorzugte Kohlenwasserstoffharze sind solche vom DCPD (Dicyclopentadien)-, C₅- und C₉-Typ oder Mischungen davon mit einem mittleren Molekulargewicht von weniger als 2000 und einem Erweichungspunkt im Bereich von 120 bis 160°C. Mischungen schließen physikalische Mischungen in fester oder plastifizierter Form ein, ebenso wie Mischungen, welche durch Copolymerisation unterschiedlicher Monomerspezies aus der C5- und C9-Fraktion hergestellt werden. Solche Kohlenwasserstoffharze sind beispielsweise von der Firma Eastman unter der Bezeichnung Plastolyn R1140 (C₉) und ExxonMobil Oppera PR100N (DCPD) erhältlich.

Als Nukleierungsmittel kommen beispielsweise Sorbitderivate, etwa Sorbitacetale in Frage.

Bevorzugte Nukleierungsmittel sind solche vom Sorbittyp, beispielsweise Bis (4-propylbenzyliden)propylsorbit, erhältlich von der Firma Milliken unter der Bezeichnung Millad NX 8000, oder Millad 3988.

Ein weiteres bevorzugtes Nukleierungsmittel ist N-[3,5-bis-(2,2-dimethylpropionylamino)phenyl]-2,2-dimethylpropionamid.

In der Kernschicht oder den Kernschichten können übliche Zuschlagsstoffe enthalten sein, die eine gute Verarbeitung im Extrusionsverfahren ermöglichen. Die Deckschichten enthalten in der Regel ein Antiblockmittel, das die Haftung des Produkts bei der Extrusion und auf der Rolle reduziert und die Gleitfähigkeit steigert. Solche Antiblockmittel sind in der Regel in einer Menge von 0,05 bis 0,5 Gew.-%, insbesondere 0,1 bis 0,3 Gew.-%, im Polymer enthalten. Ein übliches Antiblockmittel ist beispielsweise das Produkt Sylobloc 45 von der Firma Grace auf der Basis von Kieselsäure.

Erfindungsgemäß bevorzugt sind dreischichtige und fünfschichtige Folien einer Gesamtstärke von 20 bis 70, insbesondere 25 bis 50 µm. Bei den dreischichtigen Folien entfallen dabei 5 bis 20 % der Gesamtdicke auf jede Deckschicht und 60 bis 90 % auf die Kernschicht. Bei den fünfschichtigen Folien ist die Verteilung 5 bis 15 % der Gesamtstärke pro Deckschicht, 10 bis 20 % auf jede der Zwischenschichten und 30 bis 70 % auf die Kernschicht. Dabei bestehen die Zwischenschicht und die Kernschicht vorzugsweise aus einem Polypropylen-Homopolymer und die Deckschichten aus einem Polypropylen-Random-Copolymer mit Ethylen oder einem Terpolymer aus Ethylen, Propylen, Butylen oder gegebenenfalls weiteren α-Olefinen.Die erfindungsgemäßen Zusatzstoffe sind dabei in den Zwischenschichten und der Kernschicht enthalten. Die Zwischenschichten sind insofern weitere Kernschichten.

Die mehrschichtigen Polyolefinfolien gemäß der Erfindung haben eine Reihe von vorteilhaften Eigenschaften, die sich auf die Kombination des Kohlenwasserstoffharzes mit dem Nukleierungsmittel zurückführen lassen. Dies sind zum einen die Verbesserungen der Barrierewirkung gegenüber Sauerstoff, die bis zu 58 % betragen kann (geringere Durchlässigkeit) und der Barrierewirkung für Wasserdampf, die bis zu 42 % betragen kann (verminderte Durchlässigkeit).

Neben der Verbesserung der Barrierewirkung ergibt sich ferner eine deutliche Zunahme beim E-Modul und bei der Zugfestigkeit der so modifizierten Folien. Es wird angenommen, dass die Verbesserung der Barrierewirkung durch das Nukleierungsmittel nicht auf das Mittel selbst zurückgeht, sondern indirekt eine Folge der durch das Mittel verbesserten Kristallisation des Polyolefins ist.

In der Regel führt der Zusatz eines Kohlenwasserstoffharzes zu einer Polyolefinfolie zu einer deutlichen Verminderung der Kristallisationsgeschwindigkeit und Kristallisationspeaktemperatur. Das Kohlenwasserstoffharz wirkt als Kristallisationshemmer. Durch den Zusatz vom Nukleierungsmittel wird dieser Kristallisationshemmung entgegengewirkt. Sie kann bei geeigneter Einstellung der Mengen völlig kompensiert werden. Bei einem Zuschlag von bis zu 15 Gew.-% Kohlenwasserstoffharz reicht in der Regel eine Menge von bis zu 1 Gew.-% Nukleierungsmittel zur Kompensation völlig aus.

Die erfindungsgemäßen Folien zeigen keine nachweisbare Migration von Inhaltsstoffen in wässriger, alkoholischer und saurer Umgebung. Die Migration von Kohlenwasserstoffharz in Pflanzenöl liegt unter den zulässigen Grenzwerten, ebenso die des Nukleierungsmittels. Dabei zeigt sich, dass die Anwesenheit des Nukleierungsmittels die Globalmigration vermindert, vermutlich aufgrund der besseren Kristallisation.

Die erfindungsgemäßen Folien sind insbesondere für Verpackungszwecke einsetzbar, beispielsweise auch von Lebensmitteln.

Es versteht sich, dass die erfindungsgemäße Folie auch im Verbund mit anderen Folien eingesetzt werden kann wie auch in metallisierter Form.

Die Erfindung wird durch das nachfolgende Ausfertigungsbeispiel näher erläutert:

### Testfolie

Die Testfolie hat eine Stärke von 35 µm und fünf Schichten, eine Kernschicht, zwei Zwischenschichten und zwei Deckschichten bei symmetrischem Aufbau. Von der Folienstärke entfielen je 5 % auf die Deckschichten, je 12,5 % auf die Zwischenschichten und 65 % auf die Kernschicht. Für die Zwischenschichten und die Kernschicht wurde ein Polypropylen-Homopolymer verwandt (Castfolientype Sabic PP 520P), für die Deckschichten ein Polypropylen Random-Copolymer (Castfolientype Borealis RD204CF).

Als exemplarische Kohlenwasserstoffharze wurde ein C₅-Harz der Firma Exxonmobil mit einem Erweichungspunkt von 140°C (Oppera PR100N) und ein C₉-Harz der Firma Eastman mit einem Erweichungspunkt von 140°C (Plastolyn R1140) eingesetzt. Die Harze wurden mittels eines Master-Batches mit einem Harzgehalt von 60 % in Polypropylen zugesetzt.

Als Nukleierungsmittel wurde Milliken Millad NX8000 eingesetzt, zugegeben mittels eines Master-Batches mit 10 % Nukleierungsmitteln in Polypropylen. Die Deckschichten enthielten als Antiblockmittel Sylobloc 45, zugegeben mittels eines Master-Batches von 10 % in Polypropylen.

Zu Vergleichszwecken wurden sechs Folien im Castverfahren hergestellt, von denen die Folie TW0 in den Deckschichten nur das Antiblockmittel (1,5 Gew.-%) enthielt, die Vergleichsfolie TW18 neben dem Antiblockmittel in den Deckschichten 9,0 Gew.-% C₉-Kohlenwassertsoffharz in den Zwischenschichten und in der Kernschicht, die Vergleichsfolie TW20 9,0 Gew.-% DCPD-G₅-Kohlenwasserstoffharz in den Zwischenschichten und der Kernschicht und die Vergleichsfolie TW27 lediglich 4,0 Gew.-‰ Milliken Millad NX8000 in den Zwischenschichten und der Kernschicht, jedoch kein Kohlenwasserstoffharz.

Die erfindungsgemäße Folien TW25 und TW26 enthielten zusätzlich zum Kohlenwasserstoffharz 4 Gew-‰ Milliken Millad NX8000, und zwar TW25 in Kombination mit dem C₉₋Kohlenwasserstoffherz und TW26 in Kombination mit dem DCPD-Kohtenwasserstoffharz.

Die Zusammensetzung der Folien für die Tests ist in Tabelle I zusammengefasst.

Tabelle II zeigt die Messwerte der so hergestellten Folien auf die Barrierewirkung für Sauerstoff und Wasserdampf. Es ergibt sich, dass die Kombination eines Kohlenwasserstoffharzes mit dem Nukleierungsmittel zu einer deutlichen Verbesserung der Barrierewirkung führt.

Die oben beschriebenen Testfolien wurden zudem hinsichtlich ihres E-Moduls, ihrer Zugfestigkeit und ihrer Streckgrenze untersucht. Die Ergebnisse sind in Tabelle III zusammengefasst.

Es zeigt sich, dass das E-Modul und die Zugfestigkeit durch die kombinierte Verwendung von Kohlenwasserstoffharz und Nukleierungsmittel um 100 % beziehungsweise 70 % verbessert wurden. Bei der Streckgrenze zeigte sich eine Verminderung um 50 % nur für das Kohlenwasserstoffharz; das Nukleierungsmittel hatte keinen Einfluss. Beim E-Modul und der Zugfestigkeit lag die Verbesserung deutlich über der additiven Wirkung der beiden Zuschlagsstoffe.

**Tabelle I**

| Folie | Deckschicht PP-Random | Zwischen schicht PP-Homo | Kernschicht PP-Homo | Zwischenschicht PP-Homo | Deckschicht PP-Random |
|---|---|---|---|---|---|
| TW0 | 0,15 % AB | - | - | - | 0,15 % AB |
| TW18 | 0,15 % AB | 9 % C₉ | 9 % C₉ | 9 % C₉ | 0,15 % AB |
| TW20 | 0,15 % AB | 9 % DCPD | 9 % DCPD | 9 % DCPD | 0,15 % AB |
| TW27 | 0,15 % AB | 4 ‰ NC | 4 ‰ NC | 4 ‰ NC | 0,15 % AB |
| TW25 | 0,15 % AB | 9 % C₉ 4 ‰ NC | 9 % C₉ 4 ‰ NC | 9 % C₉ 4 ‰ NC | 0,15 % AB |
| TW26 | 0,15 % AB | 9 % DCPD 4 ‰ NC | 9 % DCPD 4 ‰ NC | 9 % DCPD 4 ‰ NC | 0,15 % AB |

| | | | | | |
|---|---|---|---|---|---|
| AB Antiblockmittel NC Nukleierungsmittel DCPD/C₉ DCPD-/C₉-Kohlenwasserstoffharz Alle Angaben in Gew.-% | | | | | |

**Tabelle II**

| | Durchlässigkeit O₂ | Durchlässigkeit Wasserdampf |
|---|---|---|
| TW0 | 100 % | 100 % |
| TW18 | 68 % | 93 % |
| TW20 | 58 % | 71 % |
| TW27 | 68 % | 88 % |
| TW25 | 53 % | 72 % |
| TW26 | 42 % | 58 % |

| | | |
|---|---|---|
| Der Wert für die Barrierewirkung der Vergleichsfolie TW0 wurde auf 100 % normiert. | | |

**Tabelle III**

| | E-Modul | Zugfestigkeit | Streckgrenze |
|---|---|---|---|
| TW18 | + 20 % | +15 % | - 50 % |
| TW27 | + 60 % | + 50 % | ± 0 % |
| TW25 | + 100 % | + 70 % | - 50 % |

## Patentansprüche

1. Mehrschichtige Polyolefinfolie mit Barrierewirkung gegen Sauerstoff und Wasserdampf, welche zwei Deckschichten, zwei Zwischenschichten und eine Kernschicht aufweist, wobei die beiden Zwischenschichten und die Kernschicht ein Kohlenwasserstoffharz zusammen mit einem Nukleirungsmittel enthalten,
**dadurch gekennzeichnet, dass** das
Kohlenwasserstoffharz ein Dicyclopentadien (DCPD), C₅- oder C₉-Harz mit einer Erweichungstemperatur im Bereich von 120 bis 160°C ist und das Nukleierungsmittel Bis(4-propylbenzyliden)propylsorbit, Bis(3,4-dimethylbenzyliden)sorbit oder N-[3,5-bis-(2,2-dimethylpropionylamino)phenyl]-2,2-dimethyl-propionamid ist.

2. Mehrschichtige Polyolefinfolie nach Anspruch 1, **dadurch gekennzeichnet, dass** die jeweilige Schicht 0,1 bis 1 Gew.-%, vorzugsweise 0,2 bis 0,8 Gew.-% Nukleierungsmittel enthält.

3. Mehrschichtige Polyolefinfolie nach einem der vorstehenden Ansprüche, **dadurch gekennzeichnet, dass** sie 5 bis 20 Gew.-%, vorzugsweise 6 bis 12 Gew.-% Kohlenwasserstoffharz in der jeweiligen Schicht enthält.

4. Mehrschichtige Polyolefinfolie nach einem der vorstehenden Ansprüche, mit einer Gesamtschichtdicke von 20 bis 70 µm, insbesondere 25 bis 50 µm.

5. Mehrschichtige Polyolefinfolie nach einem der vorstehenden Ansprüche, mit zwei Deckschichten, zwei Zwischenschichten und einer Kernschicht, wobei die Deckschichten jeweils 5 bis 15 %, die Zwischenschichten 10 bis 20 % und die Kernschicht 30 bis 70 % der Gesamtschichtdicke ausmachen.

6. Mehrschichtige Polyolefinfolie nach einem der vorstehenden Ansprüche, **dadurch gekennzeichnet, dass** die Deckschichten mit einem Antiblockmittel modifiziert sind.

7. Mehrschichtige Polyolefinfolie nach Anspruch 6, **gekennzeichnet durch** 0,05 bis 0,5 Gew.-%, insbesondere 0,1 bis 0,3 Gew.-% Antiblockmittel in den Deckschichten.

8. Mehrschichtige Polyolefinfolie nach einem der vorstehenden Ansprüche, **dadurch gekennzeichnet, dass** es eine Polypropylenfolie ist.

9. Mehrschichtige Polyolefinfolie nach Anspruch 8, **dadurch gekennzeichnet, dass** die Kernschicht und gegebenenfalls die Zwischenschichten ein Polypropylen-Homopolymer enthalten.

10. Mehrschichtige Polyolefinfolie nach Anspruch 8 oder 9, **dadurch gekennzeichnet, dass** die Deckschichten ein Polypropylen-Random-Polymer enthalten oder ein Terpolymer aus Ethylen, Propylen, Butylen und/oder weiteren α-Olefinen.

11. Mehrschichtige Polyolefinfolie nach einem der vorstehenden Ansprüche als Lebensmittelfolie.

12. Verwendung einer mehrschichtigen Polyolefinfolie nach einem der vorstehenden Ansprüche als Lebensmittelfolie.

## Claims

1. Multilayer polyolefin film with a barrier effect against oxygen and water vapor, comprising two cover layers, two intermediate layers and one core layer, wherein the two intermediate layers and the core layer contain a hydrocarbon resin together with a nucleating agent,
**characterised in that**
the hydrocarbon resin is a dicyclopentadiene (DCPD), C₅ or C₉ resin with a softening point in the range of 120 to 160°C, and the nucleating agent is bis(4-propylbenzylidene)propylsorbitol, bis(3,4-dimethylobenzylideno) sorbitol or N-[3,5-bis(2,2-dimethylpropionylamino)phenyl]-2,2-dimethylpropionamide.

2. Multilayer polyolefin film according to claim 1, **characterised in that** the relevant layers contain 0.1 to 1 wt.%, preferably 0.2 to 0.8 wt.%, nucleating agent.

3. Multilayer polyolefin film according to one of the preceding claims, **characterised in that** it contains 5 to 20 wt.%, preferably 6 to 12 wt.%, hydrocarbon resin in the relevant layers.

4. Multilayer polyolefin film according to one of the preceding claims, having a total layer thickness of 20 to 70 µm, in particular 25 to 50 µm.

5. Multilayer polyolefin film according to one of the preceding claims, having two cover layers, two intermediate layers and one core layer, wherein the cover layers each account for 5 to 15%, the intermediate layers for 10 to 20% and the core layer for 30 to 70% of the total layer thickness.

6. Multilayer polyolefin film according to one of the preceding claims, **characterised in that** the cover layers are modified with an antiblocking agent.

7. Multilayer polyolefin film according to claim 6, **characterised by** 0.05 to 0.5 wt.%, in particular 0.1 to 0.3 wt.%, antiblocking agent in the cover layers.

8. Multilayer polyolefin film according to one of the preceding claims, **characterised in that** it is a polypropylene film.

9. Multilayer polyolefin film according to claim 8, **characterised in that** the core layer and possibly the intermediate layers contain a polypropylene homopolymer.

10. Multilayer polyolefin film according to claim 8 or 9, **characterised in that** the cover layers contain a polypropylene random polymer or a terpolymer of ethylene, propylene, butylene and/or further α-olefins.

11. Multilayer polyolefin film according to one of the preceding claims as a food film.

12. Use of a multilayer polyolefin film according to one of the preceding claims as a food film.

## Revendications

1. Feuille de polyoléfine multicouche dotée d'un effet de barrière contre l'oxygène et la vapeur d'eau, qui comporte deux couches extérieures, deux couches intermédiaires et une couche centrale, les deux couches intermédiaires et la couche centrale contenant une résine hydrocarbonée avec un agent de nucléation,
**caractérisée en ce que**
la résine hydrocarbonée est un dicyclopentadiène (DCPD), une résine C₅ ou C₉ avec une température de ramollissement comprise entre 120 et 160 °C et l'agent de nucléation est du bis(4-propylbenzylidène)propylsorbitol, bis(3,4-diméthylbenzylidène)sorbitol ou N-[3,5-bis-(2,2-diméthylpropionylamino)phényl]-2,2-diméthyl-propionam ide.

2. Feuille de polyoléfine multicouche selon la revendication 1, **caractérisée en ce que** la couche respective contient 0,1 à 1 % en poids, de préférence 0,2 à 0,8 % en poids d'agent de nucléation.

3. Feuille de polyoléfine multicouche selon l'une des revendications précédentes, **caractérisée en ce qu'**elle contient 5 à 20 % en poids, de préférence 6 à 12 % en poids de résine hydrocarbonée dans la couche respective.

4. Feuille de polyoléfine multicouche selon l'une des revendications précédentes, avec une épaisseur de couche totale de 20 à 70 µm, en particulier 25 à 50 µm.

5. Feuille de polyoléfine multicouche selon l'une des revendications précédentes, dotée de deux couches extérieures, deux couches intermédiaires et une couche centrale, les couches extérieures représentant respectivement 5 à 15 %, les couches intermédiaires 10 à 20 % et la couche centrale 30 à 70 % de l'épaisseur de couche totale.

6. Feuille de polyoléfine multicouche selon l'une des revendications précédentes, **caractérisée en ce que** les couches extérieures sont modifiées avec un agent antiadhérent.

7. Feuille de polyoléfine multicouche selon la revendication 6, **caractérisée par** 0,05 à 0,5 % en poids, en particulier 0,1 à 0,3 % en poids d'agent antiadhérent dans les couches extérieures.

8. Feuille de polyoléfine multicouche selon l'une des revendications précédentes, **caractérisée en ce qu'**il s'agit d'une feuille de polypropylène.

9. Feuille de polyoléfine multicouche selon la revendication 8, **caractérisée en ce que** la couche centrale et le cas échéant les couches intermédiaires contiennent un homopolymère de polypropylène.

10. Feuille de polyoléfine multicouche selon la revendication 8 ou 9, **caractérisée en ce que** les couches extérieures contiennent un polymère statistique de polypropylène ou un terpolymère d'éthylène, propylène, butylène et/ou autres α-oléfines.

11. Feuille de polyoléfine multicouche selon l'une des revendications précédentes sous la forme d'un film pour contact alimentaire.

12. Utilisation d'une feuille de polyoléfine multicouche selon l'une des revendications précédentes sous la forme d'un film pour contact alimentaire.
